# EUROPÄISCHE PATENTSCHRIFT

(11) **EP 3 060 439 B1**
(45) Veröffentlichungstag und Bekanntmachung des Hinweises auf die Patenterteilung: **10.03.2021**
(21) Anmeldenummer: 14776821.2
(22) Anmeldetag: 26.09.2014
(51) Int. Cl.: B60T 15/18

(54) **RELAISVENTIL, VENTILEINRICHTUNG SOWIE FAHRZEUG DAMIT**
RELAY VALVE, VALVE DEVICE, AND VEHICLE THEREWITH
VANNE-RELAIS, SYSTÈME DE VANNE ET VÉHICULE ÉQUIPÉ DE CEUX-CI

(30) Priorität: 26.10.2013 DE 102013017876
(43) Veröffentlichungstag der Anmeldung: 31.08.2016
(73) Patentinhaber: WABCO GmbH, 30453 Hannover (DE)
(72) Erfinder: SIEKER, Armin, 33611 Bielefeld (DE)
(74) Vertreter: Lauerwald, Jörg
(86) Internationale Anmeldenummer: PCT/EP2014/002621
(87) Internationale Veröffentlichungsnummer: WO 2015/058829

(56) Entgegenhaltungen:
- DE-A1- 19 855 217
- FR-A1- 2 247 371
- US-A- 3 730 226
- US-A1- 2013 020 514
- US-B1- 6 662 561

## Beschreibung

Die Erfindung betrifft ein Relaisventil für eine Druckluftanlage, eine Ventileinrichtung mit dem Relaisventil sowie ein Fahrzeug mit dem Relaisventil und/oder mit der Ventileinrichtung.

Ein Relaisventil gemäß dem Stand der Technik beschleunigt das Be- und Entlüften beispielsweise der Bremszylinder. Es arbeitet als luftmengenverstärkendes Ventil, indem das Relaisventil mit verhältnismäßig kleinen Druckluftmengen verhältnismäßig große Druckluftmengen, z.B. für die Bremszylinder einer Druckluftbremsanlage eines Fahrzeugs, steuert.

Herkömmlicherweise weist das Relaisventil ein Gehäuse auf, welches über einen mit einer Druckmittelquelle verbindbaren Druckmitteleingang, über wenigstens einen mit einem Verbraucher verbindbaren Druckmittelausgang, über wenigstens einen Steuereingang sowie über wenigstens eine zur Atmosphäre führende Entlüftung verfügt. Ferner weist das Relaisventil einen Relaisventilkolben auf, welcher in dem Gehäuse entlang einer Relaisventilkolbenachse verschiebbar angeordnet ist und im Gehäuse eine Steuerkammer und eine Arbeitskammer voneinander abteilt.

Der Relaisventilkolben ist somit auf der einen Seite über die Steuerkammer mit Steuerdruck und auf der anderen Seite über den Druckmittelausgang mit einem von einem Verbraucher bereitgestellten Arbeitsdruck beaufschlagbar.

Zwischen der Arbeitskammer und einer über den Druckmitteleingang mit der Druckmittelquelle verbindbaren Belüftungskammer ist ein Einlassventil und zwischen der Arbeitskammer und einer zur Atmosphäre führenden Entlüftungskammer ist ein Auslassventil angeordnet.

Bei Beaufschlagung der Steuerkammer mit einem Druckmittel bewegt sich der Relaisventilkolben abhängig vom Steuerdruck des Druckmittels in die Arbeitskammer hinein. Im Laufe der Bewegung schließt der Relaisventilkolben zunächst das Auslassventil und öffnet anschließend gegen die Kraft einer Feder das Einlassventil. Durch die zwischen der Belüftungskammer und der Arbeitskammer hergestellte Verbindung wird in der Arbeitskammer ein Druck aufgebaut, welcher an dem Relaisventilkolben dem Steuerdruck entgegenwirkt.

Herrscht zwischen dem durch die Drücke am Relaisventilkolben hervorgerufenen Kräfte im Wesentlichen ein Gleichgewicht, wird der Relaisventilkolben entgegen seiner ursprünglichen Bewegung zurückgeschoben. Dabei wird das Einlassventil geschlossen, ohne jedoch das Auslassventil zu öffnen, so dass der Druck in der Arbeitskammer und in den über den Druckmittelausgang angeschlossenen Verbrauchern erhalten bleibt.

Wird die Steuerkammer teilweise oder vollständig entlüftet, bewegt sich der Relaisventilkolben weiter entgegengesetzt seiner ursprünglichen Bewegungsrichtung und das Auslassventil öffnet sich. Daraufhin sinkt der Druck in der Arbeitskammer bis auf einen Wert bei dem wieder ein Kräftegleichgewicht am Relaisventilkolben herrscht und das Auslassventil wieder geschlossen ist. Bei einer vollständigen Entlüftung der Steuerkammer wird auch die Arbeitskammer vollständig entlüftet, was zu einer Entlüftung der nachgeschalteten Verbraucher führt. Ein derart arbeitendes Relaisventil ist beispielsweise aus EP 1 844 999 A1 bekannt.

Derartige herkömmliche Relaisventile sind üblicherweise zusammen mit weiteren Komponenten in einer Ventileinrichtung integriert, insbesondere eine Ventileinrichtung mit einer Vorsteuereinheit und mindestens einem Relaisventil. Solche Ventileinrichtungen werden in pneumatischen Systemen, wie beispielsweise Bremssysteme oder Luftfederungen für Nutzfahrzeuge eingesetzt.

Durch das Beaufschlagen der Steuerkammer des Relaisventils mit einem Druckmittel kann es jedoch zu Schwingungen des Relaisventilkolbens kommen, da der Relaisventilkolben zusammen mit dem als Luftfeder wirkenden Steuerkammervolumen ein schwingungsfähiges System darstellt. Derartige Schwingungen entstehen bevorzugt bei getakteter Anregung des Relaisventils und können zur Zerstörung des Relaisventils führen.

In DE 102 38 182 A1 ist eine mögliche Ausgestaltung des Relaisventils zur Vermeidung von Schwingungen des Relaisventilkolbens gezeigt. Eine abgedichtete, in der Arbeitskammer angeordnete Zwischenwand weist eine Einrichtung zum Druckausgleich auf. Dabei hat die Zwischenwand die Funktion einer Prallwand und schirmt den Relaisventilkolben vor den dynamischen Gasströmungskräften ab. Es können jedoch bei dieser Anordnung unerwünschte, ausgeprägte Druckspitzen in Abhängigkeit der Größe der angeschlossenen Verbraucher entstehen

Die Schrift US 3,730,226 offenbart ein Relaisventil für eine druckluftbetriebene Bremsanlage, das ein Dämpfungsvolumen zur Dämpfung von Schwingungen aufweist.

Der Erfindung liegt daher das Problem zugrunde, ein Relaisventil bzw. eine Ventileinrichtung zu verbessern, insbesondere die Schwingungen des Relaisventilkolbens zuverlässig zu reduzieren.

Die Erfindung löst diese Aufgabe mit einem Relaisventil nach Anspruch 1, einer Ventilanordnung nach Anspruch 9, einem Fahrzeug nach Anspruch 10 sowie einer Verwendung eines Relaisventils nach Anspruch 11.

Das erfindungsgemäße Relaisventil ist für eine Druckluftanlage geeignet und weist ein Gehäuse mit einem mit einer Druckmittelquelle verbindbaren Druckmitteleingang, wenigstens einem Steuereingang sowie mit wenigstens einer zur Atmosphäre führenden Entlüftung auf.

Ferner weist das Relaisventil einen Relaisventilkolben auf, welcher in dem Gehäuse entlang einer Relaisventilkolbenachse verschiebbar angeordnet ist und im Gehäuse eine Steuerkammer und eine Arbeitskammer voneinander abteilt.

Das erfindungsgemäße Relaisventil zeichnet sich durch ein Dämpfungsvolumen aus, welches pneumatisch mit der Steuerkammer des Relaisventils verbunden ist.

Herkömmliche Relaisventile, insbesondere getaktet angesteuerte Relaisventile, neigen bei bestimmten Betriebszuständen zu ausgeprägten Eigenschwingungen, die zum einen Geräusche verursachen und zum anderen zu einer Zerstörung des Relaisventils führen können. Das zusätzliche Dämpfungsvolumen im Steuerteil des Relaisventils reduziert vorteilhaft die Schwingungsfähigkeit des Relaisventilkolbens und führt somit zur Vermeidung der nachteiligen Eigenschwingungen des Relaisventils.

In einer bevorzugten Ausführungsform der Erfindung ist das Dämpfungsvolumen in dem Gehäuse, insbesondere in einem Gehäusedeckel des Gehäuses, integriert bzw. angeordnet. Dadurch lassen sich vorteilhaft ohne großen Mehraufwand bestehende Relaisventile mit einem Dämpfungsvolumen erweitern, indem lediglich der Gehäusedeckel ausgetauscht werden muss.

Gemäß einer alternativen Ausführungsform der Erfindung ist das Dämpfungsvolumen im Relaisventilkolben angeordnet. Dazu weist der Relaisventilkolben einen um die Relaisventilkolbenachse verlaufenden Hohlraum auf, welcher mit der Steuerkammer pneumatisch verbunden ist.

Eine derartige Anordnung des Dämpfungsvolumens ist auch dann vorteilhaft möglich, wenn aus Platzgründen ein zusätzliches Volumen im Gehäusedeckel nicht umsetzbar ist oder die äußeren Abmessungen des herkömmlichen Relaisventils konstruktionsbedingt beibehalten werden müssen.

Eine weitere bevorzugte Ausführungsform sieht einen Kanal zwischen dem Dämpfungsvolumen und der Steuerkammer vor, welcher derart ausgebildet ist, um das Dämpfungsvolumen pneumatisch mit der Steuerkammer zu verbinden. Ferner ist in dem Kanal eine Verbindungsdrossel angeordnet.

Der Kanal ermöglicht vorteilhaft ein leichtes Einführen einer größenangepassten Verbindungsdrossel. Die Verbindungsdrossel wirkt als eine Verengung des Kanals. Die Verbindungsdrossel und das Dämpfungsvolumen beeinflussen die wirksame Steifigkeit der aus dem Steuerkammervolumen gebildeten Luftfeder und sind dabei derart bemessen, dass die Schwingungen des Relaisventilkolbens vermieden werden.

Gemäß einer weiteren bevorzugten Ausführungsform der Erfindung weist das Relaisventil ein oder mehrere Steuerdruckleitungen auf, welche derart ausgestaltet ist oder sind, um ein mit einem Steuerdruck beaufschlagtes Druckmittel in den Kanal zwischen dem Dämpfungsvolumen und der Steuerkammer einzuspeisen.

Dabei kann die Steuerdruckleitung aus Sicht des Dämpfungsvolumens vor der Verbindungsdrossel oder hinter der Verbindungsdrossel mit dem Kanal pneumatisch verbunden sein. Bei mehr als einer Steuerdruckleitung können die Steuerdruckleitungen auch auf beiden Seiten der Verbindungsdrossel mit dem Kanal pneumatisch verbunden sein.

Durch die individuelle Anordnung der möglichen Steuerdruckleitungen lassen sich vorteilhaft verschiedene Zeitverhalten beim Beaufschlagen des Relaisventils mit Druckmitteln erzielen, um die Dämpfung zu optimieren.

In einer alternativen Ausführungsform der Erfindung ist statt eines Kanals zwischen dem Dämpfungsvolumen und der Steuerkammer eine Blende zwischen dem Dämpfungsvolumen und der Steuerkammer vorgesehen, wobei die Blende eine als Verbindungsdrossel wirkende Öffnung aufweist.

Die Verwendung einer Blende hat den Vorteil, dass das erfindungsgemäße Dämpfungsvolumen auch dann eingesetzt werden kann, wenn ein Kanal nicht verwendet werden kann, beispielsweise aus Platzgründen.

In einer weiteren bevorzugten Ausführungsform der Erfindung wird eine Steuerdruckleitung direkt in die Steuerkammer geführt, um ein Druckmittel in die Steuerkammer einzuspeisen. Somit wird vorteilhaft die Steuerkammer zuerst befüllt, bevor das Druckmittel in das Dämpfungsvolumen strömt.

In einer weiteren bevorzugten Ausführungsform der Erfindung wird eine Steuerdruckleitung direkt in das Dämpfungsvolumen geführt, um ein Druckmittel in das Dämpfungsvolumen einzuspeisen. Somit wird vorteilhaft das Dämpfungsvolumen zuerst befüllt, bevor das Druckmittel in die Steuerkammer strömt.

Ferner wird o. g. Aufgabe durch eine Ventileinrichtung für eine Druckluftanlage gelöst, wobei die Ventileinrichtung das erfindungsgemäße Relaisventil aufweist. Dabei ist die Ventileinrichtung bevorzugt eine elektronische Luftaufbereitungseinrichtung, eine elektronische Feststellbremseinrichtung oder beispielsweise ein Achsmodulator oder auch eine andere Einrichtung für eine Druckluftanlage.

Die Erfindung löst das ihr zugrunde liegende Problem ferner mit einem Fahrzeug, insbesondere einem Nutzfahrzeug, welches wenigstens ein erfindungsgemäßes Relaisventil und/oder wenigstens eine erfindungsgemäße Ventileinrichtung aufweist.

Schließlich betrifft die Erfindung die Verwendung eines Relaisventils für eine Druckluftanlage in einem Kraftfahrzeug, insbesondere eine Druckluftbremsanlage in einem Lastkraftwagen. Dabei ist das Relaisventil erfindungsgemäß ausgebildet und kann in einer erfindungsgemäßen Ventileinrichtung eingesetzt werden.

Weitere Ausführungsformen ergeben sich aus den Ansprüchen sowie aus den anhand der Zeichnung näher erläuterten Ausführungsbeispielen. In der Zeichnung zeigen:
- Fig. 1: ein Relaisventil gemäß dem Stand der Technik,
- Fig. 2: einen Ausschnitt eines Relaisventils gemäß einem Ausführungsbeispiel der Erfindung mit einem Dämpfungsvolumen im Inneren des Relaisventilkolbens,
- Fig. 3: einen Ausschnitt eines Relaisventils gemäß einem weiteren Ausführungsbeispiel der Erfindung mit einem Dämpfungsvolumen im Inneren des Relaisventilkolbens,
- Fig. 4: einen Ausschnitt eines Relaisventils gemäß einem alternativen Ausführungsbeispiel der Erfindung mit einem Dämpfungsvolumen im Gehäusedeckel,
- Fig. 5: einen Ausschnitt eines Relaisventils gemäß einem weiteren alternativen Ausführungsbeispiel der Erfindung mit einem Dämpfungsvolumen im Gehäusedeckel,
- Fig. 6: eine schematische Darstellung zur Erläuterung der verschiedenen Anschlussmöglichkeiten und Anordnungen des Dämpfungsvolumens bei einem Druckmittelanschluss,
- Fig. 7: eine schematische Darstellung zur Erläuterung der verschiedenen Anschlussmöglichkeiten und Anordnungen des Dämpfungsvolumens bei zwei Druckmittelanschlüssen und
- Fig. 8: eine schematische Darstellung zur Erläuterung der verschiedenen Anschlussmöglichkeiten und Anordnungen des Dämpfungsvolumens bei drei Druckmittelanschlüssen.

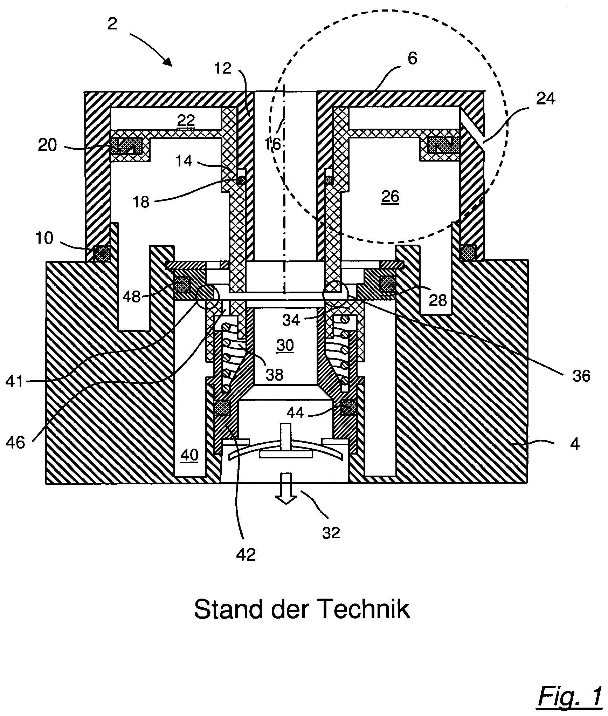

Fig. 1 zeigt ein luftmengenverstärkendes Relaisventil 2 gemäß dem Stand der Technik, welches Druckluft gemäß einem anliegenden Steuerdruck aussteuert und bereitstellt. Die gemäß Steuerdruck ausgesteuerte Druckluft kann dabei mit vergleichsweise größerer Luftmenge in kurzer Zeit bereitgestellt werden.

Das Relaisventil 2 weist ein aus einem ersten Gehäuseteil 4 und einem zweiten Gehäuseteil 6, insbesondere Gehäusedeckel, bestehendes Gehäuse auf. Die Gehäuseteile 4 und 6 sind miteinander fest verbunden und mit einem Dichtelement 10 gegeneinander abgedichtet.

In dem Gehäusedeckel 6 verläuft eine Relaisventilkolbenführung 12 in der ein Relaisventilkolben 14 entlang einer Relaisventilkolbenachse 16 verschiebbar angeordnet ist. Das Gehäuseteil 6 und der Relaisventilkolben 14 sind durch einen Dichtring 18 gegeneinander abgedichtet. Ein weiterer, als Z-Ring ausgebildeter Dichtring 20 dichtet das Gehäuseteil 6 an der Randseite gegenüber dem beweglichen Relaisventilkolben 14 ab.

Eine oberhalb des Relaisventilkolbens 14 angeordnete Steuerkammer 22 wird von dem Relaisventilkolben 14 und dem Gehäusedeckel 6 bzw. dem zweiten Gehäuseteil 6 begrenzt. Über eine Steuerdruckleitung 24 lässt sich ein mit einem Steuerdruck beaufschlagtes Druckmittel in die Steuerkammer 22 einspeisen.

Fig. 1 zeigt das Relaisventil 2 in einer Entlüftungsposition, bei der Druckluft von einer Arbeitskammer 26 an einem Einsatz 28 vorbei in eine Entlüftungskammer 30 geführt wird. Die Entlüftungskammer 30 ist über einen Ausgang 32 mit der Atmosphäre verbunden, so dass die Druckluft durch die Entlüftungskammer 30 entweichen kann.

Über einen hier nicht dargestellten Druckmittelausgang ist die Arbeitskammer 26 mit einem Verbraucher, beispielsweise einem Bremszylinder, pneumatisch verbunden. Somit wird ein angeschlossener Verbraucher entlüftet, wenn der Druck in der Arbeitskammer 26 mindestens so groß ist wie der Steuerdruck in der Steuerkammer 22.

Wird der Steuerdruck in der Steuerkammer 22 jedoch weiter erhöht, übersteigt er den Druck in der Arbeitskammer 26 und der Relaisventilkolben 14 nimmt eine Neutralposition ein. In dieser Neutralposition ist ein Spalt zwischen dem Relaisventilkolben 14 und einem Belüftungskolben 34 verschlossen, so dass ein Auslassventil 36 die Arbeitskammer 26 von der Entlüftungskammer 30 pneumatisch absperrt. Zur Erzeugung einer besseren Dichtigkeit ist der Belüftungskolben 34 bevorzugt mit einem Gummi umspritzt. Ferner wird der Belüftungskolben 34 von einer Feder 38 in seiner Position gehalten, wenn keine Kraft von dem Relaisventilkolben 14 auf den Belüftungskolben 34 wirkt.

Eine Erhöhung des Steuerdrucks in der Steuerkammer 22 bewirkt, dass sich der Relaisventilkolben 14 in eine Belüftungsposition bewegt, wenn der Steuerdruck gegenüber dem Arbeitsdruck so groß ist, um sowohl den Relaisventilkolben 14 gegen seine Reibkraft an den Dichtringen 18 und 20 als auch den Belüftungskolben 34 gegen die Federkraft der Feder 38 zu bewegen.

Durch die Bewegung des Relaisventilkolbens 14 entsteht zwischen dem Belüftungskolben 34 und dem Einsatz 28 ein Spalt, welcher eine Belüftungskammer 40 pneumatisch mit der Arbeitskammer 26 verbindet und somit ein Einlassventil 41 öffnet. Dabei wird die Belüftungskammer 40 über einen hier nicht dargestellten Druckmitteleingang von einer Druckmittelquelle mit einem Druckmittel, insbesondere Druckluft, versorgt. Die Feder 38 und der Belüftungskolben 34 werden von einem Trägerelement 42 gehalten, wobei das Trägerelement 42 in das erste Gehäuseteil 4 eingesetzt ist und mittels eines Dichtrings 44 gegen das Gehäuse abgedichtet ist.

Der Raum in dem die Feder 38 angeordnet ist, ist durch eine Öffnung 46 mit der Arbeitskammer 26 verbunden, um einen Druckausgleich in dem die Feder 38 aufweisenden Raum zu ermöglichen. Dabei wird das erste Gehäuseteil 4 gegen den Einsatz 28 bzw. die Belüftungskammer 40 gegen die Arbeitskammer 26 mittels eines weiteren Dichtrings 48 pneumatisch abgedichtet.

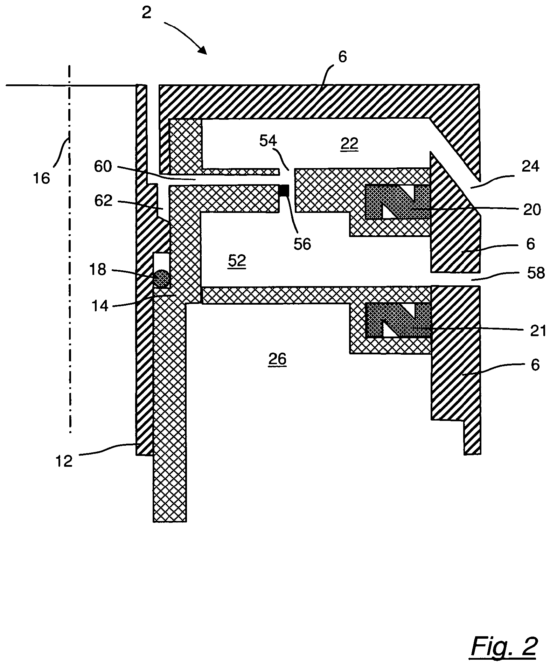

Fig. 2 zeigt einen Ausschnitt eines Relaisventils 2 gemäß einem Ausführungsbeispiel der Erfindung. Der in Fig. 1 mit einer gestrichelten Linie umrandete Bereich des Relaisventils 2 ist in Fig. 2 vergrößert dargestellt.

Gemäß diesem Ausführungsbeispiel weist der Relaisventilkolben 14 ein Dämpfungsvolumen 52 im Inneren des Relaisventilkolbens 14 auf. Das Dämpfungsvolumen 52 ist über einen Kanal 54 mit der Steuerkammer 22 pneumatisch verbunden. Bevorzugt ist in dem Kanal 54 eine Verbindungsdrossel 56 angeordnet, welche den Kanalquerschnitt verengt. Bei korrekter Auslegung des Dämpfungsvolumens 52 und der Größe der Verbindungsdrossel 56 wird vorteilhaft das Schwingungsverhalten des Relaisventilkolbens 14 unterbunden.

Wird nun die Steuerkammer 22 über die Steuerdruckleitung 24 mit Druckluft beaufschlagt, strömt diese zunächst in die Steuerkammer 22 und von dort aus über die Verbindungsdrossel 56 in das nachgeschaltete Dämpfungsvolumen 52.

Dem Relaisventil 2 ist üblicherweise eine Vorsteuereinheit vorschaltet, welche hier jedoch nicht dargestellt ist. Die Vorsteuereinheit beispielsweise eines Druckregelkreises einer elektronischen Bremsanlage weist elektrisch ansteuerbare und in bestimmter Weise pneumatisch verschaltete Ventile auf, welche bevorzugt als Magnetventile ausgeführt sind. Neben elektrischen Anschlüssen zum Ansteuern der Magnetventile verfügt die Vorsteuereinheit üblicherweise über zwei pneumatische Eingänge und einem Ausgang. Über einen ersten Eingang wird die Vorsteuereinheit mit einem anliegenden Redundanzdruck versorgt und über einen zweiten Eingang mit einem Vorratsdruck des Druckregelkreises der elektronischen Bremsanlage.

Eine mögliche Ausgestaltung einer derartigen Vorsteuereinheit ist in DE 102 45 916 A1 gezeigt. Der hier gezeigte Bremsdruckmodulator weist bevorzugt eine kompakte mechanische Bauform auf, bei der die Vorsteuereinheit und das Relaisventil in einem Ventilblock angeordnet sind. Dabei ist der Eingang des Relaisventils mit dem Ausgang der Vorsteuereinheit verbunden, wobei die Verbindungen innerhalb des Ventilblocks als Bohrungen oder Kanäle im Druckgussgehäuse ausgebildet sind.

Das Relaisventil ist jedoch nicht auf einen Eingang beschränkt. Vielmehr kann ein Relaisventil, beispielsweise einer Bremsanlage, bis zu drei separate Druckmittelanschlüsse im Steuerteil aufweisen, welche über die Magnetventile der Vorsteuereinheit mit einem Steuerdruck, mit einem Vorratsdruck oder mit der Atmosphäre verbindbar sind.

Das Relaisventil 2 gemäß Fig. 2 weist zusätzlich zur ersten Steuerdruckleitung 24 eine zweite Steuerdruckleitung 58 auf, welche direkt mit dem Dämpfungsvolumen 52 verbunden ist.

Eine weitere, dritte mögliche Steuerdruckleitung 60 ist in dem Relaisventilkolben 14 derart angeordnet, dass das Druckmittel über diese Steuerdruckleitung 60 in den Kanal 54 zwischen Steuerkammer 22 und Dämpfungsvolumen 52 geführt werden kann.

Die Steuerdruckleitung 60 ist in dem Gehäuseteil 6 nach oben geführt, wobei eine seitliche Ausnehmung 62 in dem Gehäuseteil 6 ein Durchströmen der Steuerdruckleitung 60 mit einem Druckmittel auch dann ermöglicht, wenn der Relaisventilkolben 14 nach unten bewegt wurde.

In dem in Fig. 2 dargestellten Ausführungsbeispiel mündet die dritte Steuerdruckleitung 60 oberhalb der Verbindungsdrossel 56 in den Kanal 54, wodurch ein Großteil des Druckmittels erst in die Steuerkammer 22 gelangt und zeitlich verzögert das Dämpfungsvolumen 52 beaufschlagt wird.

Analog zu vorstehender Ausführung ist eine vierte mögliche Steuerdruckleitung vorgesehen, welche in Fig. 2 jedoch nicht dargestellt ist, da sie sich bevorzugt in einer anderen, hier nicht dargestellten Schnittebene im Relaisventilkolben 14 befindet.

Die vierte mögliche Steuerdruckleitung verläuft ähnlich wie die dritte mögliche Steuerdruckleitung 60 zunächst durch das Gehäuseteil 6, insbesondere durch die Relaiskolbenführung 12, über eine Ausnehmung in den Relaisventilkolben 14 hinein bis zum Kanal 54, welcher die Steuerkammer 22 und das Dämpfungsvolumen 52 miteinander verbindet. Bevorzugt mündet die vierte Steuerdruckleitung unterhalb der Verbindungsdrossel 56 in den Kanal 54, so dass bei dieser Anordnung zunächst das Druckmittel in das Dämpfungsvolumen 52 gelangt und zeitlich verzögert in die Steuerkammer 22.

Die vorstehend beschriebenen vier möglichen Steuerdruckleitungen erläutern lediglich mögliche Druckmittelanschlüsse. Sie sind jedoch nicht alle zwingend vorhanden. Vielmehr kann jede der Steuerdruckleitungen einzeln oder in beliebiger Kombination mit einer oder zwei weiteren Leitungen vorhanden sein.

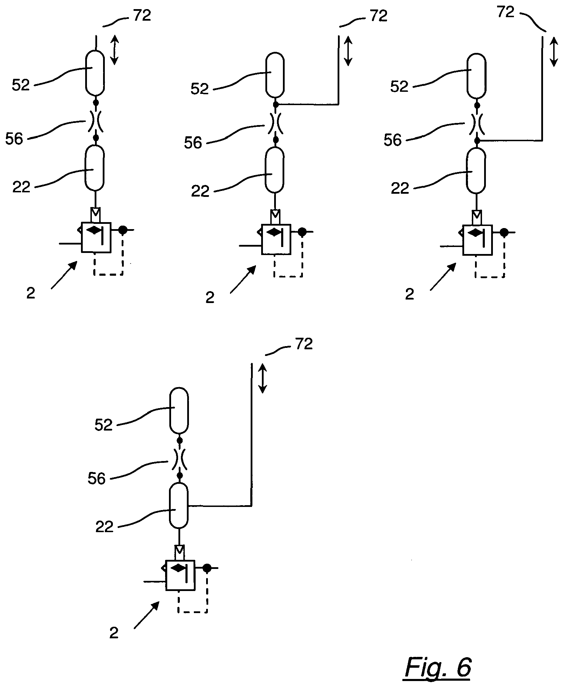

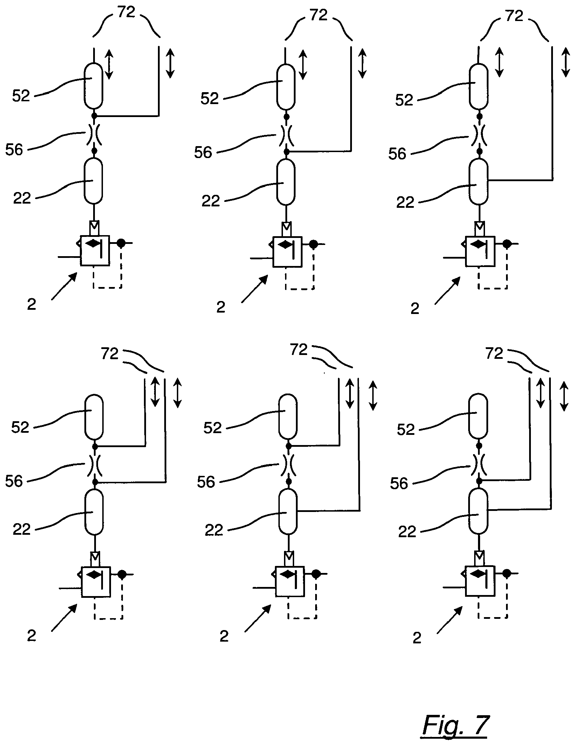

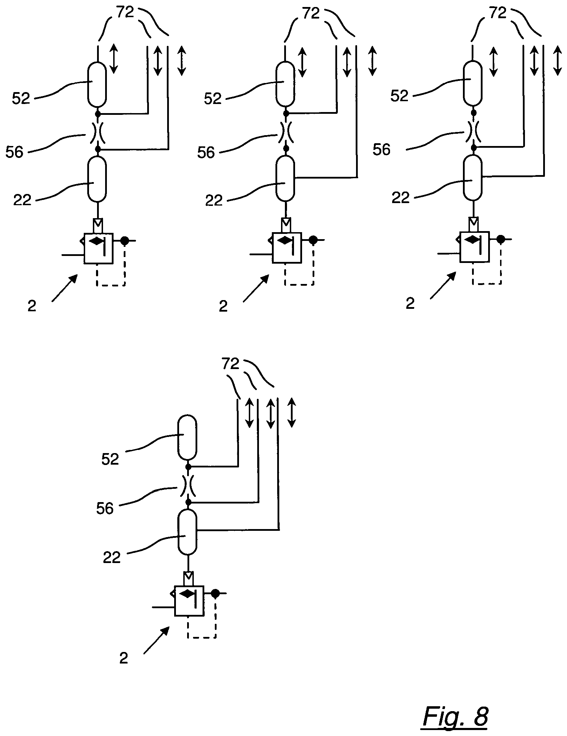

Fig. 6 zeigt eine Übersicht über die möglichen Anschlüsse einer Steuerdruckleitung bei Verwendung von nur einem Druckmittelanschluss, Fig. 7 zeigt eine Übersicht über die möglichen Anschlüsse der Steuerdruckleitungen bei Verwendung von zwei Druckmittelanschlüssen und Fig. 8 zeigt eine Übersicht über die möglichen Anschlüsse der Steuerdruckleitungen bei Verwendung von drei Druckmittelanschlüssen am Steuerteil des Relaisventils 2. Die unterschiedlichen Anschlussmöglichkeiten besitzen unterschiedliche Zeitverhalten beim Beaufschlagen des Relaisventilkolbens 14 mit Druckmittel bzw. beim Entlüften des Relaisventils 2. Dadurch kann vorteilhaft unter Berücksichtigung der Größe des Dämpfungsvolumens 52 und der Verbindungsdrossel 56 die Schwingungsdämpfung des Relaisventilkolbens 14 optimiert werden.

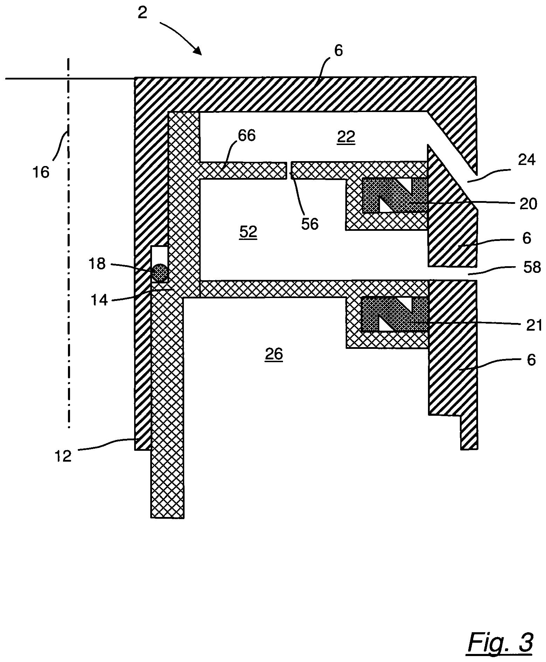

Fig. 3 zeigt einen Ausschnitt eines Relaisventils 2 gemäß einer alternativen Ausführungsform der Erfindung. Es ist hier ebenfalls der in Fig. 1 mit einer gestrichelten Linie umrandete Bereich dargestellt.

In dieser Ausführungsform ist das Dämpfungsvolumen 52 ebenfalls innerhalb des Relaisventilkolbens 14 angeordnet jedoch durch eine Blende 66 von der Steuerkammer 22 abgetrennt, wobei eine in der Blende 66 angeordnete Öffnung als Verbindungsdrossel 56 wirkt.

Diese Ausführungsform eignet sich besonders dann, wenn aus Platz- oder Konstruktionsgründen kein Kanal 54 im Relaisventilkolben 14 angeordnet werden kann.

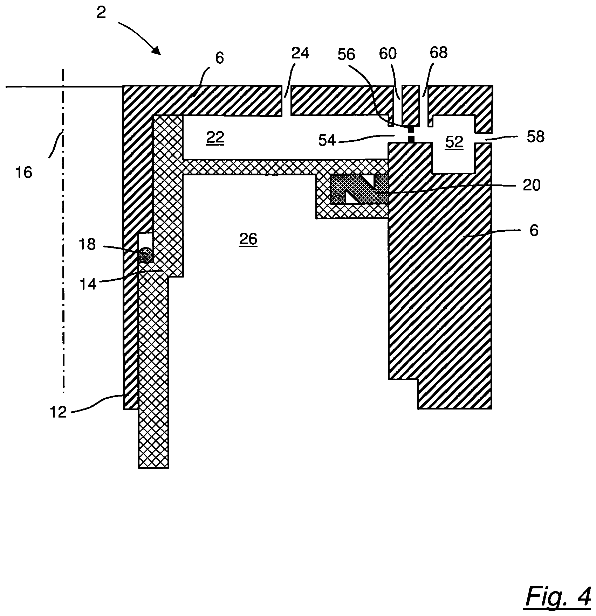

Fig. 4 zeigt einen Ausschnitt eines Relaisventils 2 gemäß einer weiteren alternativen Ausführungsform der Erfindung. Der gemäß Fig. 1 mit einer gestrichelten Linie umrandete Bereich des Relaisventils 2 ist hier wieder vergrößert dargestellt.

In dieser alternativen Ausführungsform ist das Dämpfungsvolumen 52 im Gehäuse, insbesondere im zweiten Gehäuseteil 6 bzw. im Gehäusedeckel, angeordnet.

Zwischen dem Dämpfungsvolumen 52 und der Steuerkammer 22 ist ein Kanal 54 zur pneumatischen Verbindung von Dämpfungsvolumen 52 und Steuerkammer 22 vorgesehen. Zur Verengung des Kanals 54 ist in dem Kanal 54 eine Verbindungsdrossel 56 eingebracht. Bei einer korrekten Auslegung des Dämpfungsvolumens 52 und der Größe der Verbindungsdrossel 56 kommt es zu einer reibungsunabhängigen Eigendämpfung des Systems, wodurch vorteilhaft das Schwingungsverhalten des Relaisventilkolbens 14 unterbunden wird.

Eine erste mögliche Steuerdruckleitung 24 ist über dem Gehäusedeckel 6 direkt in die Steuerkammer 22 geführt und eine zweite mögliche Steuerdruckleitung 58 ist gemäß Fig. 4 direkt in das Dämpfungsvolumen 52 geführt.

Zusätzlich sind hier eine dritte Steuerdruckleitung 60 und eine vierte Steuerdruckleitung 68 vorgesehen, welche jeweils vor bzw. nach der Verbindungsdrossel 56 in den Kanal 54 zwischen der Steuerkammer 22 und dem Dämpfungsvolumen 52 führt.

Wie bereits zu dem Ausführungsbeispiel gemäß Fig. 2 erläutert, geben die vorstehend genannten vier Steuerdruckleitungen 24, 58, 60 und 68 lediglich mögliche Druckmittelanschlüsse an, welche nicht alle vorhanden sein müssen. Jede der Steuerdruckleitungen 24, 58, 60 oder 68 kann einzeln oder in beliebiger Kombination mit einer oder mehreren Leitungen vorhanden sein.

Die in Fig. 6 bis Fig. 8 dargestellten möglichen Anschlüsse der Steuerdruckleitungen lassen sich auch auf die Ausführungsform der Erfindung gemäß Fig. 4 übertragen.

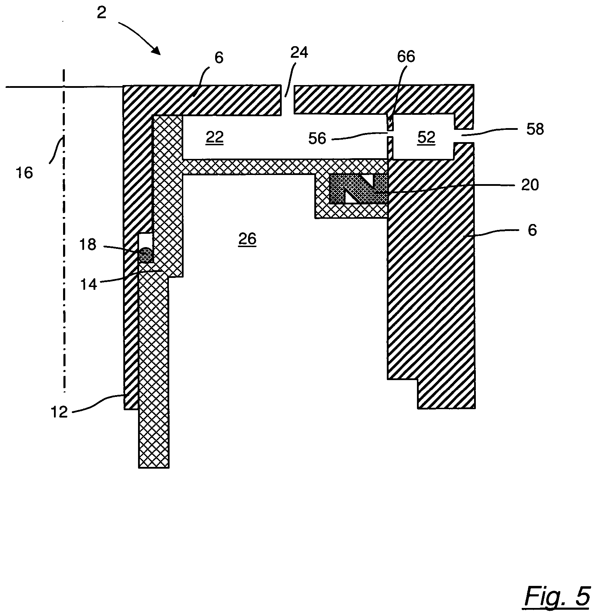

Fig. 5 zeigt einen Ausschnitt eines Relaisventils 2 gemäß einer weiteren alternativen Ausführungsform der Erfindung. Hier ist das Dämpfungsvolumen 52 ebenfalls, wie in Fig. 4 gezeigt, im zweiten Gehäuseteil 6 bzw. Gehäusedeckel angeordnet, jedoch durch eine Blende 66 von der Steuerkammer 22 abgetrennt. Eine in der Blende 66 angeordnete Öffnung wirkt dabei als Verbindungsdrossel 56.

Diese Ausführungsform benötigt vorteilhaft weniger Platz im Gehäusedeckel 6, da der in Fig. 4 gezeigte Kanal 54 entfällt.

Fig. 6 bis Fig. 8 zeigen verschiedene Möglichkeiten zur Anordnung des Dämpfungsvolumens 52 in dem Relaisventil 2 auf. Fig. 6 zeigt schematisch Anordnungsmöglichkeiten mit einem Druckmittelanschluss 72, wobei der Druckmittelanschluss 72 an die erste Steuerdruckleitung 24, an die zweite Steuerdruckleitung 58, an die dritte Steuerdruckleitung 60 oder an die vierte Steuerdruckleitung 68 gemäß den Ausführungen zu Fig. 2 und Fig. 4 anschließbar ist.

Fig. 7 zeigt schematisch Anordnungsmöglichkeiten mit zwei Druckmittelanschlüssen 72, wobei je ein Druckmittelanschluss 72 an die erste Steuerdruckleitung 24, an die zweite Steuerdruckleitung 58, an die dritte Steuerdruckleitung 60 oder an die vierte Steuerdruckleitung 68 gemäß den Ausführungen zu Fig. 2 und Fig. 4 anschließbar ist.

Fig. 8 zeigt schematisch Anordnungsmöglichkeiten mit drei Druckmittelanschlüssen 72, wobei je ein Druckmittelanschluss 72 an die erste Steuerdruckleitung 24, an die zweite Steuerdruckleitung 58, an die dritte Steuerdruckleitung 60 oder an die vierte Steuerdruckleitung 68 gemäß den Ausführungen zu Fig. 2 und Fig. 4 anschließbar ist.

Die Ausführungen gemäß Fig. 2 bis Fig. 5 bzgl. der möglichen Steuerdruckleitungen 24, 58, 60 und 68 geben lediglich Anschlussbeispiele ab. Die Erfindung ist nicht auf die dargestellten Ausführungsformen beschränkt. Konstruktionsbedingt lassen sich die Steuerdruckleitungen 24, 58, 60 und 68 im Relaisventil 2 beliebig anordnen, um das Schwingungsverhalten des Relaisventilkolbens 14 zu reduzieren.

Die Druckmittelanschlüsse 72 gemäß Fig. 6 bis Fig. 8 können über die jeweilige Steuerdruckleitung beispielsweise mit einem Steuerdruck, einem Vorratsdruck oder mit der Atmosphäre über die Vorsteuereinheit des Bremssystems verbunden werden. Durch die verschiedenen Anschlussmöglichkeiten kann das Zeitverhalten beim Beaufschlagen des Relaisventils 2 mit einem Druckmittel bzw. beim Entlüften des Relaisventils 2 variiert werden, so dass die Dämpfung des Relaisventilkolbens 14 optimiert und das Schwingungsverhalten des Relaisventilskolbens 14 vorteilhaft unterbunden wird.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Die Offenbarung der Erfindung ist daher nicht auf die beschriebenen bzw. beanspruchten Merkmalskombinationen beschränkt. Vielmehr sind alle im Rahmen der Erfindung sinnvollen Merkmalskombinationen als offenbart zu betrachten.

## Patentansprüche

1. Relaisventil für eine Druckluftanlage mit einem Gehäuse, welches einen mit einer Druckmittelquelle verbindbaren Druckmitteleingang, wenigstens einen mit einem Verbraucher verbindbaren Druckmittelausgang, wenigstens einen Steuereingang sowie wenigstens eine zur Atmosphäre führende Entlüftung (32) aufweist und mit einem Relaisventilkolben (14), welcher in dem Gehäuse entlang einer Relaisventilkolbenachse (16) verschiebbar angeordnet ist und im Gehäuse eine Steuerkammer (22) und eine Arbeitskammer (26) voneinander abteilt,
**gekennzeichnet durch**
ein Dämpfungsvolumen (52), welches mit der Steuerkammer (22) pneumatisch verbunden ist.

2. Relaisventil nach Anspruch 1,
**dadurch gekennzeichnet, dass**
das Dämpfungsvolumen (52) in dem Gehäuse, insbesondere in einem Gehäusedeckel (6), integriert ist.

3. Relaisventil nach Anspruch 1 oder 2,
**dadurch gekennzeichnet, dass**
das Dämpfungsvolumen (52) im Relaisventilkolben (14) angeordnet ist.

4. Relaisventil nach einem der vorhergehenden Ansprüche,
**gekennzeichnet durch**
einen Kanal (54) zwischen dem Dämpfungsvolumen (52) und der Steuerkammer (22), welcher derart ausgebildet ist, um das Dämpfungsvolumen (52) pneumatisch mit der Steuerkammer (22) zu verbinden und
eine in dem Kanal (54) angeordnete Verbindungsdrossel (56).

5. Relaisventil nach Anspruch 4,
**gekennzeichnet durch**
ein oder mehrere Steuerdruckleitungen (24; 58; 60; 68), welche derart ausgestaltet ist oder sind, um ein mit Steuerdruck beaufschlagtes Druckmittel in den Kanal (54) zwischen dem Dämpfungsvolumen (52) und der Steuerkammer (22) einzuspeisen.

6. Relaisventil nach einem der Ansprüche 1 bis 3,
**gekennzeichnet durch**
eine Blende (66) zwischen dem Dämpfungsvolumen (52) und der Steuerkammer (22), wobei die Blende (66) eine als Verbindungsdrossel (56) wirkende Öffnung aufweist.

7. Relaisventil nach einem der vorhergehenden Ansprüche,
**gekennzeichnet durch**
eine Steuerdruckleitung (24), welche direkt in die Steuerkammer (22) führt, um ein Druckmittel direkt in die Steuerkammer (22) einzuspeisen.

8. Relaisventil nach einem der vorhergehenden Ansprüche,
**gekennzeichnet durch**
eine Steuerdruckleitung (58), welche direkt in das Dämpfungsvolumen (52) führt, um ein Druckmittel direkt in das Dämpfungsvolumen (52) einzuspeisen.

9. Ventileinrichtung für eine Druckluftanlage,
**gekennzeichnet durch**
ein Relaisventil (2) nach einem der Ansprüche 1 bis 8.

10. Fahrzeug, insbesondere Nutzfahrzeug,
**gekennzeichnet durch**
wenigstens ein Relaisventil (2) nach einem der Ansprüche 1 bis 8 und/oder wenigstens eine Ventileinrichtung nach Anspruch 9.

11. Verwendung eines Relaisventils (2) für eine Druckluftanlage in einem Kraftfahrzeug, insbesondere einer Druckluftbremsanlage in einem Lastkraftwagen,
**dadurch gekennzeichnet, dass**
das Relaisventil (2) nach einem der Ansprüche 1 bis 8 ausgebildet ist oder das Relaisventil (2) in einer Ventileinrichtung gemäß Anspruch 9 und/oder in einem Fahrzeug gemäß Anspruch 10 eingesetzt wird.

## Claims

1. Relay valve for a compressed air system, having a housing, which has a pressure medium inlet that can be connected to a pressure medium source, at least one pressure medium outlet that can be connected to a consuming unit, at least one control inlet, and at least one vent (32) leading to atmosphere, and having a relay valve piston (14), which is arranged in the housing in such a way that the relay valve piston can be moved along a relay valve piston axis (16) and divides a control chamber (22) and a working chamber (26) from each other in the housing,
**characterized by**
a damping volume (52), which is pneumatically connected to the control chamber (22).

2. Relay valve according to Claim 1,
**characterized in that**
the damping volume (52) is integrated into the housing, in particular into a housing cover (6).

3. Relay valve according to Claim 1 or 2,
**characterized in that**
the damping volume (52) is arranged in the relay valve piston (14).

4. Relay valve according to one of the preceding claims,
**characterized by**
a passage (54) between the damping volume (52) and the control chamber (22), which passage is designed to connect the damping volume (52) pneumatically to the control chamber (22), and
a connecting restrictor (56) arranged in the passage (54).

5. Relay valve according to Claim 4,
**characterized by**
one or more control pressure lines (24; 58; 60; 68), which is or are configured to feed a pressure medium subject to control pressure into the passage (54) between the damping volume (52) and the control chamber (22).

6. Relay valve according to one of Claims 1 to 3,
**characterized by**
an orifice plate (66) between the damping volume (52) and the control chamber (22), wherein the orifice plate (66) has an opening which acts as a connecting restrictor (56).

7. Relay valve according to one of the preceding claims,
**characterized by**
a control pressure line (24), which leads directly into the control chamber (22) in order to feed a pressure medium directly into the control chamber (22) .

8. Relay valve according to one of the preceding claims,
**characterized by**
a control pressure line (58), which leads directly into the damping volume (52) in order to feed a pressure medium directly into the damping volume (52) .

9. Valve device for a compressed air system,
**characterized by**
a relay valve (2) according to one of Claims 1 to 8.

10. Vehicle, in particular commercial vehicle,
**characterized by**
at least one relay valve (2) according to one of Claims 1 to 8 and/or at least one valve device according to Claim 9.

11. Use of a relay valve (2) for a compressed air system in a motor vehicle, in particular an air braking system in a heavy goods vehicle,
**characterized in that**
the relay valve (2) is designed according to one of Claims 1 to 8 or the relay valve (2) is used in a valve device according to Claim 9 and/or in a vehicle according to Claim 10.

## Revendications

1. Soupape relais destinée à un système à air comprimé et comprenant un boîtier, qui comporte une entrée de milieu sous pression pouvant être reliée à une source de milieu sous pression, au moins une sortie de milieu sous pression pouvant être reliée à un consommateur, au moins une entrée de commande et au moins une purge (32) menant à l'atmosphère, et un piston de soupape relais (14) qui est disposé dans le boîtier de manière coulissante le long d'un axe de piston de soupape relais (16) et qui sépare une chambre de commande (22) et une chambre de travail (26) l'une de l'autre dans le boîtier,
**caractérisée par**
un volume d'amortissement (52) qui est relié pneumatiquement à la chambre de commande (22).

2. Soupape relais selon la revendication 1,
**caractérisée en ce que**
le volume d'amortissement (52) est intégré dans le boîtier, notamment dans un couvercle de boîtier (6).

3. Soupape relais selon la revendication 1 ou 2,
**caractérisée en ce que**
le volume d'amortissement (52) est disposé dans le piston de soupape relais (14).

4. Soupape relais selon l'une des revendications précédentes,
**caractérisée par**
un canal (54) qui est ménagé entre le volume d'amortissement (52) et la chambre de commande (22) et qui est conçu pour relier pneumatiquement le volume d'amortissement (52) à la chambre de commande (22) et un étranglement de liaison (56) disposé dans le canal (54) .

5. Soupape relais selon la revendication 4,
**caractérisée par**
une ou plusieurs conduites de pression de commande (24 ; 58 ; 60 ; 68) qui sont conçues pour amener un milieu de pression, soumis à la pression de commande, dans le canal (54) ménagé entre le volume d'amortissement (52) et la chambre de commande (22).

6. Soupape relais selon l'une des revendications 1 à 3,
**caractérisée par**
un diaphragme (66) situé entre le volume d'amortissement (52) et la chambre de commande (22), le diaphragme (66) ayant une ouverture agissant comme un étranglement de liaison (56).

7. Soupape relais selon l'une des revendications précédentes,
**caractérisée par**
une conduite de pression de commande (24) qui mène directement dans la chambre de commande (22) afin d'amener un milieu sous pression directement dans la chambre de commande (22).

8. Soupape relais selon l'une des revendications précédentes,
**caractérisée par**
une conduite de pression de commande (58) qui mène directement dans le volume d'amortissement (52) afin d'amener un milieu sous pression directement dans le volume d'amortissement (52).

9. Moyen à soupape destiné à un système à air comprimé,
**caractérisé par**
une soupape relais (2) selon l'une des revendications 1 à 8.

10. Véhicule, en particulier véhicule utilitaire,
**caractérisé par**
au moins une soupape relais (2) selon l'une des revendications 1 à 8 et/ou au moins un moyen à soupape selon la revendication 9.

11. Utilisation d'une soupape relais (2) destinée à un système à air comprimé dans un véhicule automobile, en particulier un système de freinage à air comprimé dans un camion,
**caractérisée en ce que**
la soupape relais (2) est conçue selon l'une des revendications 1 à 8 ou la soupape relais (2) est utilisée dans un moyen à soupape selon la revendication 9 et/ou dans un véhicule selon la revendication 10.
